Europäisches Patentamt

**European Patent Office**

**Office européen des brevets**

(19)

(11) Veröffentlichungsnummer: **0 044 071**
**B2**

(12)                    NEUE EUROPÄISCHE PATENTSCHRIFT

(45) Veröffentlichungstag der neuen Patentschrift:
04.07.90

(51) Int. Cl.⁵: **C 01 B 3/14**

(21) Anmeldenummer: **81105479.0**

(22) Anmeldetag: **13.07.81**

(54) **Verfahren zur Konvertierung eines Kohlenmonoxid enthaltenden Gasstroms.**

(30) Priorität: **15.07.80 DE 3026764**

(43) Veröffentlichungstag der Anmeldung:
**20.01.82 Patentblatt 82/03**

(45) Bekanntmachung des Hinweises auf die
Patenterteilung:
**16.05.84 Patenblatt 84/20**

(45) Bekanntmachung des Hinweises auf die
Entscheidung u̎ber den Einspruch:
**04.07.90 Patentblatt 90/27**

(84) Benannte Vertragsstaaten:
**BE DE FR GB IT NL**

(56) Entgegenhaltungen:
**DE-C- 874 297**
**FR-A- 1 107 788**
**US-A- 3 150 931**

**Ullmanns Encyklopädie der technischen
Chemie, 4. Auflage (1977), Bd. 14, S. 424-425**

(73) Patentinhaber: **Linde Aktiengesellschaft
Abraham-Lincoln-Strasse 21
D-6200 Wiesbaden (DE)**

(72) Erfinder: **Stead, Philip
Sudetenstrasse 23
D-8190 Wolfratshausen (DE)**
Erfinder: **Jungfer, Hans
Gräfelfinger Strasse 22
D-8000 München 70 (DE)**

(74) Vertreter: **Schaefer, Gerhard, Dr.
Linde Aktiengesellschaft Zentrale
Patentabteilung
D-8023 Höllriegelskreuth (DE)**

EP 0 044 071 B2

Courier Press, Leamington Spa, England.

**Beschreibung**

Die Erfindung betrifft ein Verfahren zur ein- oder mehrstufigen Konvertierung eines Kohlenmonoxid enthaltenden, durch Vergasung von flüssigen oder festen Brennstoffen erhaltenen Gasstroms bei Drücken zwischen 40 und 100 bar, wobei dem Gasstrom für die Konvertierung benötigter Wasserdampf, der zumindest teilweise aus einem bei der Abkühlung des konvertierten Gasstroms anfallenden Kondensat erzeugt wird, vor Eintritt in einen Konvertierungsreaktor zugeführt wird.

Die Konvertierung von Kohlenmonoxid mittels Wasserdampf in Kohlendioxid und Wasserstoff ist ein großtechnisch angewendetes Verfahren, das beispielsweise bei der Gewinnung von Wasserstoff aus verschiedenen Synthesegasen angewendet wird. Um die Konvertierung möglichst vollständig durchführen zu können, wird die Umsetzung aus Gleichgewichtsgründen mit einem großen Wasserdampfüberschuß durchgeführt. Es ist deshalb erforderlich, dem Gas Fremddampf, der beispielsweise durch Verdampfung eines aus dem konvertierten Gasstrom abgetrennten Kondensats erzeugt wird, zuzugeben. Ein derartiges Verfahren ist aus der US—A—3 150 931 bekannt. Dabei wird einem in einem katalytischen Reformierverfahren erzeugten Synthesegas das Kondensat sowie zusätzlicher Dampft in einer Abschreckkammer zugemischt. Der direkte Wärmetausch bewirkt dabei gleichzeitig die Kühlung des heißen Synthesegases und die Kondensatverdampfung, so daß das Gemisch unmittelbar in einen Konvertierungsreaktor eingeleitet werden kann. Dieses bekannte Verfahren ist insbesondere bei unter hohem Druck durchgeführten Konvertierungen nicht voll befriedigend, da für die Bereitstellung des neben dem Kondensat noch benötigten Hochdruckdampfes ein erheblicher Aufwand erforderlich ist. Außerdem ist es bei diesem Verfahren unbefriedigend, daß der hohe Wärmeinhalt des heißen Synthesegases nur zur Erzeugung von Prozeßdampf ausgenutzt werden kann.

Ein übliches Verfahren zur Verringerung des Bedarfs an Hochdruckdampf sieht vor, den zu konvertierenden Gasstrom in einem Sättiger mit heißem Wasser in Kontakt zu bringen und das konvertierte Gas durch Berieseln mit Wasser zu kühlen. Um den Bedarf an zusätzlichem Fremddampf möglichst gering zu halten, wird das dem Sättiger zuzuführende Wasser vorher möglichst hoch aufgeheizt, wozu die Abwärme des konvertierten Gasstroms ausgenutzt wird. Die weitere Abkühlung des konvertierten Gases erfolgt in einem Entfeuchter. Dort wird dem aus dem Sättiger kommenden Wasser im direkten Wärmetausch ein Teil der dort abgegebenen Wärme wieder zugeführt. Das Wasser wird somit im Kreislauf über den Sättiger und den Entfeuchter geführt. Die weitere Aufwärmung des Kreislaufwassers vor erneutem Eintritt in den Sättiger erfolgt im bereits erwähnten Wärmetausch mit dem konvertierten Gas.

Bei diesem aus der DE—A—1 567 658 bekannten Verfahren ist der Bedarf an Hochdruckdampf für die Konvertierung zwar gering, doch als ungünstig ist anzusehen, daß dieser Vorteil nur dadurch erreicht wird, daß nunmehr die bei der Konvertierung entstehende Wärme weitgehend an das Kreislaufwasser abgegeben wird. Eine Abhitzeverwertung des konvertierten Gases kann erst auf einem relativ niedrigen Temperaturniveau erfolgen und führt daher bestenfalls zur Gewinnung von wirtschaftlich gering bewertetem Niederdruckdampf.

Es ist daher Aufgabe der Erfindung, ein Verfahren der eingangs genannten Art zu entwickeln, das eine bessere Nutzung der Reaktionswärme, möglichst ohne erhöhten Investitionsaufwand, ermöglicht.

Diese Aufgabe wird dadurch gelöst, daß der aus der Vergasung austretende Gasstrom durch indirekten Wärmetausch abgekühlt und gegebenenfalls einer Reinigung unterzogen wird, das Kondensat durch indirekten Wärmetausch mit mindestens teilweise konvertiertem Gas verdampft und gemeinsam mit dem Gasstrom der Konvertierung zugeführt wird.

Im Gegensatz zu den erwähnten bekannten Verfahren verwendet das erfindungsgemäße Verfahren weder das heiße Synthesegas zur Prozeßdampferzeugung noch einen offenen Wasserkreislauf mit Sättiger oder Entfeuchter, für dessen Betrieb der größte und am höchsten bewertete Teil der bei der Konvertierung freigesetzten Wärme benötigt wird. Statt dessen wird ein Kondensat, das aufgrund des Wasserdampfüberschusses in der Konvertierungsstufe bei Abkühlung des Reaktionsprodukts anfällt, rückgeführt und wieder verdampft. Der für die Rückverdampfung benötigte Energiebetrag ist dabei geringer als der für den Betrieb eines Wasserkreislaufs erforderliche. Diese Energie wird zwar dem heißen Reaktionsprodukt entnommen, aber dennoch verbleibt beim erfindungsgemäßen Verfahren noch ein Energieüberschuß im Reaktionsgas, der beispielsweise zur Erzeugung von Mitteldruckdampf herangezogen werden kann.

In einer günstigen Ausgestaltung des erfindungsgemäßen Verfahrens wird der Wasserdampfbedarf durch ein Kondensat gedeckt, das bei einer Abkühlung des konvertierten Gasstromes auf eine Temperatur im Bereich von 160 bis 200°C gebildet wird. Die Verwendung eines derartigen Kondensats, das bei der Abkühlung des Gasstroms unter Erzeugung von Mitteldruckdampf gewonnen wird, ist energetisch besonders günstig, da nur eine geringe Aufheizung des Kondensats bis zur Erreichung der Siedetemperatur nötig ist.

Häufig werden Konvertierungsverfahren mehrstufig durchgeführt, wobei in einem ersten Konvertierungsreaktor der größte Teil des Kohlenmonoxids umgesetzt wird und in einem nachfolgenden zweiten Konvertierungsreaktor der verbliebene Kohlenmonoxidgehalt von einigen Volumenprozent umgesetzt wird. Die in der ersten Reaktionsstufe freigesetzte Reaktionswärme ist wegen des höheren Umsetzungsgrades wesentlich größer als die Reaktionswärme der zweiten Stufe. Infolgedessen ist die Austrittstemperatur des Gasstroms nach der ersten Stufe auch wesentlich höher als nach der zweiten Stufe. Bei der Anwendung eines solchen mehrstufigen Konvertierungsverfahrens ist es in weiterer Ausgestaltung des erfindungsgemäßen Verfahrens günstig, das im Prozeß anfallende Kondensat durch Wärmetausch mit dem heißen, teilweise konvertierten Gasstrom der ersten Reaktionsstufe zu verdampfen. Auf diese Weise wird nicht nur die Reaktionswärme in günstiger Weise ausgenützt, sondern gleichzeitig auch die notwendige Kühlung des Gasstromes vor Eintritt in den zweiten Konvertierungsreaktor bewirkt.

Ein wesentlicher Vorteil des erfindungsgemäßen Verfahrens ist weiterhin darin zu sehen, daß dieses Verfahren im Vergleich zu bekannten Verfahren nicht nur ohne erhöhten Investitionsaufwand, sondern sogar mit einer einfacheren Vorrichtung durchgeführt werden kann. Statt der im bekannten Verfahren verwendeten aufwendigen Berieselungstürme, die als Sättiger bzw. Entfeuchter verwendet werden, genügt es beim erfindungsgemäßen Verfahren nämlich, einen einfachen Behälter vorzusehen, der als Dampferzeuger und gleichzeitig als Mischkammer dient. Ein derartiger Behälter ist mit Zuführungsleitungen für das zu verdampfende Kondensat, für das zu konvertierende Gas sowie für zusätzlich benötigten Hochdruckdampf versehen. Die Hochdruckdampfzuführung kann dabei mit der Zuführung des Gases kombiniert werden, um eine weitere Vereinfachung zu erreichen. Ein wesentliches Merkmal des Behälters ist eine im unteren Bereich angeordnete Heizung, mittels derer die Verdampfung des Kondensats bewirkt wird. Die Heizung kann dabei entweder direkt im unteren Bereich des Behälters oder auch außerhalb des Behälters angeordnet sein, wenn zusätzlich eine Verbindungsleitung vorgesehen ist, über die Kondensat zur Heizung gelangt und der gebildete Dampf in den Behälter zurückgeführt wird. Eine einfache Art der Heizung besteht darin, daß innerhalb oder außerhalb des Behälters ein Wärmetauscher vorgesehen ist, der vom konvertierten Gasstrom oder von anderen Prozeßströmen geeigneter Temperatur beheizt wird.

Weitere Einzelheiten der Erfindung sind nachfolgend anhand von drei in den Figuren schematisch dargestellten Ausführungsbeispielen erläutert.

Die Ausführungsbeispiele beziehen sich auf die Konvertierung eines Synthesegases, das durch die Vergasung eines Schweröls gewonnen wurde. Schweröl und ein Sauerstoffträger, beispielsweise Luft und/oder Wasser werden über Leitungen 1 und 2 einem Vergasungsreaktor 3 zugeleitet und dort bei hoher Temperatur durch partielle Oxidation umgesetzt. Das gebildete Synthesegas wird über Leitung 4 einem Abhitzekessel 5 zugeleitet, in dem es sich unter Bildung von über Leitung 6 abgezogenem Hochdruckdampf abkühlt. Das Gas tritt anschließend in eine Reinigungsstufe 7, in der insbesondere mitgeführte Rußteilchen durch eine Wäsche abgetrennt und über Leitung 8 abgezogen werden. Anschließend kann in einer weiteren Wäsche eine Abtrennung von Schwefelverbindungen vorgenommen werden. Im vorliegenden Beispiel wird jedoch darauf verzichtet, da die Konvertierung in Anwesenheit schwefelresistenter Katalysatoren durchgeführt wird.

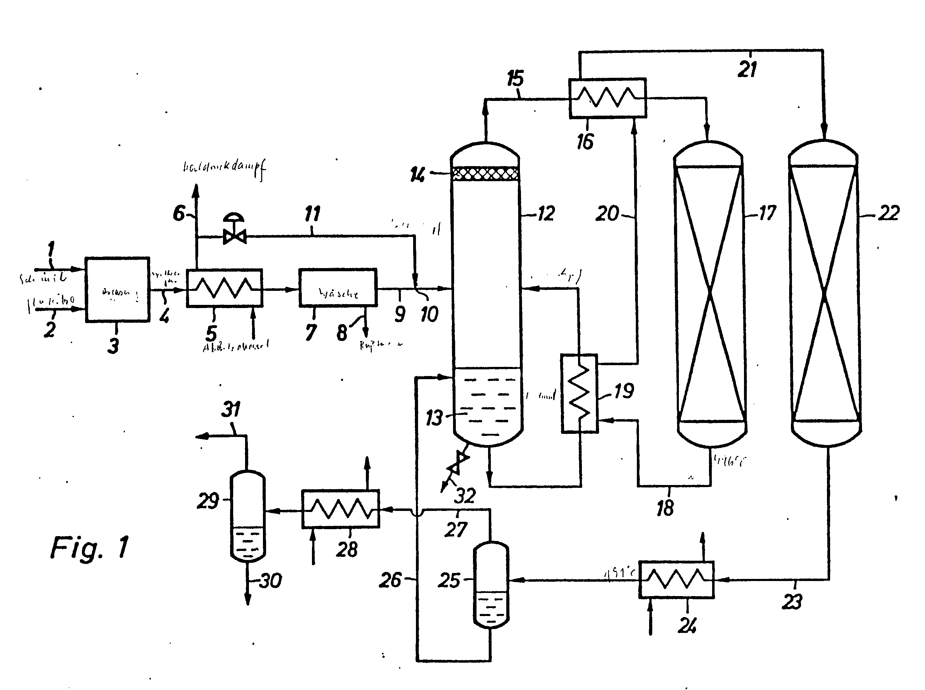

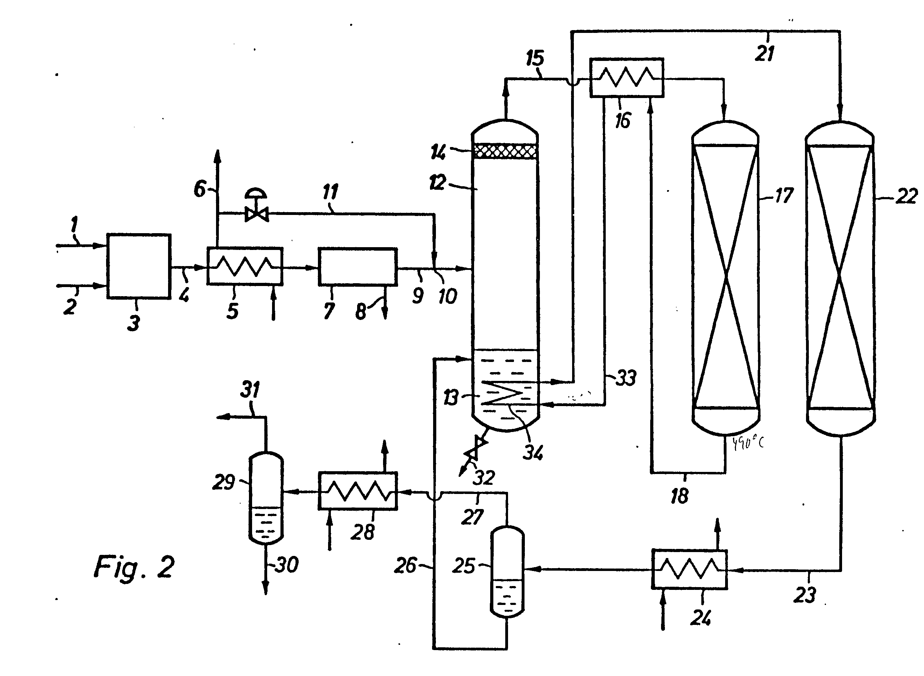

Bei den in den Fig. 1 und 2 dargestellten Beispielen verläßt das gereinigte Gas die Wäsche 7 unter einer Temperatur von 158°C und unter einem Druck von 60 bar. Die zugeführte Gasmenge beträgt 82 000 Nm$^3$/h, und das Gas setzt sich wie folgt zusammen:

| | |
|---|---|
| $H_2$ | 39,34 Mol.-% |
| CO | 43,26 Mol.-% |
| $CO_2$ | 4,15 Mol.-% |
| $H_2O$ | 11,12 Mol.-% |
| $H_2S$, COS | 1,36 Mol.-% |
| Inerte | 0,77 Mol.-% |

Dieses Rohgas wird bei 10 mit stündlich 63,6 t Hochdruckdampf vermischt. Dieser Dampf wird vom im Abhitzekessel 5 erzeugten Hochdruckdampf über Leitung 11 abgezweigt. Das Gemisch aus Gas und Wasserdampf tritt bei einer Temperatur von 234°C in den Behälter 12 ein. Hier wird ihm weiterer Wasserdampf zugesetzt, der durch Verdampfung von stündlich 15 t eines Kondensats 13 erzeugt wird. Das Gasgemisch wird anschließend nach Passieren eines Filters 14, der ein Mitreißen von Flüssigkeit verhindern soll, bei einer Temperatur von 240°C aus dem oberen Bereich des Behälters 12 abgezogen und über Leitung 15 in einem Wärmetauscher 16 auf die Eintrittstemperatur von 340°C der ersten Konvertierungsstufe 17 aufgeheizt. Die Konvertierung erfolgt in einem üblichen Konvertierungsreaktor in Anwesenheit eines schwefelresistenten Katalysators. Das über Leitung 18 aus dem Reaktor 17 austretende Gas hat sich durch die bei der exothermen Reaktion freiwerdende Wärme auf 496°C erhitzt. Es tritt in einer Menge von 180 000 Nm$^3$/h mit folgender Zusammensetzung aus dem Reaktor aus:

| | |
|---|---|
| $H_2$ | 33,86 Mol.-% |
| CO | 3,78 Mol.-% |
| $CO_2$ | 17,85 Mol.-% |
| $H_2O$ | 43,54 Mol.-% |
| $H_2S$, COS | 0,26 Mol.-% |
| Inerte | 0,35 Mol.-% |

Das heiße Gas wird beim in Fig. 1 dargestellten Verfahren zunächst im Wärmetauscher 19 gegen verdampfendes Kondensat 13 aus dem Behälter 12 auf 376°C abgekühlt und gelangt danach über Leitung 20 zum Wärmetauscher 16. Hier erfolgt eine weitere Kühlung auf 270°C gegen dem Reaktor 17 zuzuführendes Gas. Über Leitung 21 gelangt das Gas anschließend in einen zweiten Konvertierungsreaktor 22, in dem das restliche Kohlenmonoxid umgesetzt wird. Das Reaktionsprodukt wird über Leitung 23 einem Wärmetauscher 24 zugeführt, in dem es unter Bildung von Mitteldruckdampf auf 191°C abgekühlt wird. Das bei dieser Temperatur anfallende Kondensat wird in einem Abscheider 25 abgetrennt und über Leitung 26 in den unteren Bereich des Behälters 12 geleitet, wo es für die Erzeugung des Prozeßdampfes verwendet wird. Die gasförmige Fraktion aus Abscheider 25 gelangt über Leitung 27 zu einem weiteren Wärmetauscher 28, in dem eine weitere Abkühlung unter Erzeugung von Niederdruckdampf erfolgt. Dabei anfallendes Kondensat wird in einem Abscheider 29 abgetrennt und über Leitung 30 abgezogen. Es wird üblicherweise nach einer Reinigung als Abwasser abgegeben, kann jedoch auch in ein Dampferzeugersystem zurückgeführt werden, was aber eine aufwendigere Reinigung erfordert. Der konvertierte Gasstrom wird als eine Rohwasserstoff-Fraktion über Leitung 31 aus dem Abscheider 29 als das gewünschte Verfahrensprodukt abgezogen.

Über die durch ein Ventil regelbare Leitung 32 wird ein geringer Teil des Kondensats 13 des Behälters abgezogen, um eine Anreicherung von Verunreinigungen zu vermeiden.

Das in der Fig. 2 dargestellte Verfahren unterscheidet sich vom bisher beschriebenen nur durch die Art der Nutzung der im Reaktor 17 freigesetzten Reaktionswärme. Das auf 340°C vorgewärmte Gasgemisch verläßt den Reaktor 17 wiederum bei einer Temperatur von 496°C und wird über Leitung 18 direkt dem Wärmetauscher 16 zugeführt, in dem es sich gegen anzuwärmendes Gasgemisch auf 399°C abkühlt. Es gelangt dann über Leitung 33 in einen Wärmetauscher 34, der im Kondensatbereich 13 des Behälters 12 angeordnet ist. Das Gas kühlt sich dabei gegen verdampfendes Kondensat auf 270°C ab und wird dann über Leitung 21 dem zweiten Konvertierungsreaktor 22 zugeleitet.

Diese Verfahrensführung ist besonders vorteilhaft, da aufgrund der vorliegenden Temperaturdifferenzen in den Wärmetauschern 16 und 34 ein besonders günstiger Wärmeübergang erzielt werden kann, so daß die erforderliche Wärmeaustauschfläche besonders klein gehalten werden kann.

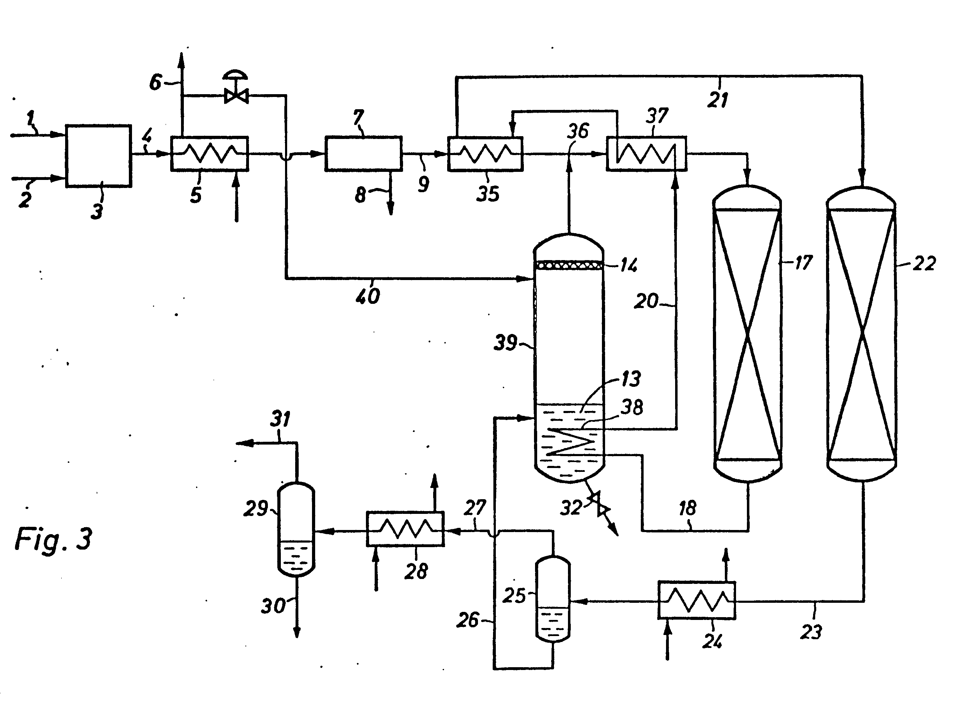

Das in der Fig. 3 dargestellte Ausführungsbeispiel der Erfindung unterscheidet sich von den vorgehenden Beispielen im wesentlichen dadurch, daß das Gasgemisch nicht mehr durch den Behälter 12 geleitet wird. Dieser Behälter ist nunmehr als reiner Dampferzeuger ausgebildet und der gewonnene Dampf wird dem Gas direkt zugemischt.

Die Erzeugung und anschließende Vorbehandlung des Rohgases entspricht der in den bisherigen Beispielen erläuterten Verfahrensweise. Aus der Wäsche 7 tritt das Gas bei einer Temperatur von 163°C und unter einem Druck von 60 bar aus, wird dann über Leitung 9 einem ersten Wärmetauscher 35 zugeleitet und dort gegen teilweise konvertiertes Gas angewärmt. Anschließend wird das Gas bei 36 mit stündlich 74,8 t Hochdruckdampf von 276°C vermischt. Das Gemisch, das eine Temperatur von 285°C aufweist, wird anschließend im Wärmetauscher 37 gegen teilweise konvertiertes Gas auf die Eintrittstemperatur von 340°C der ersten Konvertierungsstufe 17 aufgeheizt. Das Produkt dieser Verfahrensstufe tritt bei einer Temperatur von 496°C über Leitung 18 aus und wird zunächst im Wärmetauscher 38 gegen verdampfendes Kondensat 13 aus dem Behälter 39 auf 376°C abgekühlt und gelangt danach über Leitung 20 zum Wärmetauscher 37. Hier erfolgt eine weitere Abkühlung auf 323°C gegen das dem Reaktor 17 zuzuführende Gas-Dampf-Gemisch. Anschließend erfolgt eine weitere Kühlung auf 270°C im Wärmetauscher 35 gegen das über Leitung 9 herangeführte Gas. Die weitere Behandlung des über Leitung 21 abgezogenen Gasstroms entspricht der in den vorstehenden Beispielen beschriebenen Verfahrensweise.

Die dem Gasstrom bei 36 zugemischte Dampfmenge von 74,8 t/h setzt sich zusammen aus 15 t/h, die durch Verdampfung eines Kondensats 13 im Behälter 39 erzeugt werden sowie aus 59,8 t/h Hochdruckdampf, der über Leitung 40 von im Abhitzekessel 5 erzeugten Hochdruckdampf 6 abgezweigt und im Behälter 39 mit dem verdampfenden Kondensat 13 gemischt wird.

**Patentansprüche**

1. Verfahren zur ein- oder mehrstufigen Konvertierung eines Kohlenmonoxid enthaltenden, durch Vergasung von flüssigen oder festen Brennstoffen erhaltenen Gasstroms bei Drücken zwischen 40 und 100 bar, wobei dem Gasstrom für die Konvertierung benötigter Wasserdampf, der zumindest teilweise aus einem bei der Abkühlung des konvertierten Gasstroms anfallenden Kondensat erzeugt wird, vor Eintritt in einen Konvertierungsreaktor zugeführt wird, dadurch gekennzeichnet, daß der aus der Vergasung austretende Gasstrom durch indirekten Wärmeaustausch abgekühlt und gegebenenfalls einer Reinigung unterzogen wird, das Kondensat durch indirekten Wärmeaustausch mit mindestens teilweise konvertiertem Gas verdampft und gemeinsam mit dem Gasstrom der Konvertierung zugeführt wird.

2. Verfahren nach Anspruch 1, dadurch gekennzeichnet, daß ein bei der Abkühlung des konvertierten Gasstroms unter Erzeugung von Mitteldruckdampf gewonnenes Kondensat verwendet wird.

3. Verfahren nach Anspruch 1 oder 2, dadurch gekennzeichnet, daß das Kondensat durch Wärmetausch mit einem aus einer ersten von mehreren Konvertierungsstufen austretendem, teilweise konvertiertem Gasstrom verdampft wird.

4. Verfahren nach einem der Ansprüche 1 bis 3, dadurch gekennzeichnet, daß das Kondensat während der Verdampfung in Kontakt mit dem Gasstrom steht.

5. Anlage zur Durchführung des Verfahrens nach einem der Ansprüche 1 bis 4 mit einer Vergasungsanlage (3) zur Erzeugung eines Kohlenmonoxid enthaltenden Gasstroms, einem Konvertierungsreaktor (17, 22) zur Umwandlung des Kohlenmonoxids in Gegenwart von Wasserdampf zu Kohlendioxid und Wasserstoff, Wärmetauschern zur Erwärmung des Gasstroms (16, 37) auf die Eintrittstemperatur des Konvertierungsreaktors (17, 22), die insbesondere durch indirekten Wärmetausch mit dem konvertierten Gasstrom beheizt werden, und zur Kühlung des konvertierten Gasstroms (24, 28), gekennzeichnet durch einen Behälter (12, 39) mit Zuführungsleitungen für Kondensat (26), Dampf (9, 40) und gegebenenfalls zu konvertierendem Gas (9), einer dem unteren Bereich (13) des Behälters zugeordneten Heizung (19, 34, 38), einer im oberen Bereich des Behälters angeordneten Abzugsleitung (15), die zu einem dem Konvertierungsreaktor vorgeschalteten Wärmetauscher (16, 37) führt, einen Kondensatabscheider (25), in dem bei der Kühlung (24) des konvertierten Gasstroms anfallendes Kondensat abgetrennt wird, und einer Leitung (26), die vom Kondensatraum des Abscheiders (25) in den Kondensatraum im unteren Bereich (13) des Behälters (12, 39) führt.

6. Anlage nach Anspruch 5, dadurch gekennzeichnet, daß die Heizung (19, 34, 38) aus einem vom konvertierten Gasstrom (18, 33) beheizten Wärmetauscher besteht und gegebenenfalls außerhalb des Behälters (12, 39) angeordnet ist, wobei dann eine Verbindung über eine Kondensatzuführungsleitung und eine Dampfabzugsleitung zum Behälter (12) vorgesehen ist.

**Revendications**

1. Procédé de conversion en une ou plusieurs étapes à des pressions entre 40 et 100 bars d'un courant de gaz contenant du monoxyde de carbone obtenu par gazéification de combustibles liquides ou solides, la vapeur d'eau nécessaire à la conversion produite au moins partiellement à partir du condensat apparaissant lors du refroidissement du courant de gaz converti étant amenée au courant de gaz avant son entrée dans un réacteur de conversion, caractérisé en ce que le courant de gaz sortant de la gazéification est refroidi par un échange de chaleur indirect et est le cas échéant soumis à une purification, que le condensat est vaporisé par échange de chaleur indirect avec du gaz au moins partiellement converti et qu'il est amené à la conversion en même temps que le courant de gaz.

2. Procédé suivant la revendication 1, caractérisé en ce que l'on utilise un condensat obtenu lors du refroidissement du courant de gaz converti avec production de vapeur à moyenne pression.

3. Procédé suivant la revendication 1 ou 2, caractérisé en ce que le condensat est vaporisé par échange de chaleur avec un courant de gaz partiellement converti provenant de la première de l'une de plusieurs étapes de conversion.

4. Procédé suivant l'une des revendications 1 à 3, caractérisé en ce que le condensat est en contact avec le courant de gaz pendant la vaporisation.

5. Installation de mise en oeuvre du procédé suivant l'une quelconque des revendications 1 à 4, comportant une installation de gazéification (3) pour la production d'un courant de gaz contenant du monoxyde de carbone, un réacteur de conversion (17, 22) pour la transformation du monoxyde de carbone en présence de vapeur d'eau en dioxyde de carbone et hydrogène, des échangeurs de chaleur pour le réchauffage du courant de gaz (16, 37) à la température d'entrée du réacteur de conversion (17, 22) qui sont chauffés notamment par échange de chaleur indirect avec le courant de gaz converti et pour le refroidissement du courant de gaz converti (24, 28), caractérisée par un récipient (12, 39) comportant des conduites d'introduction du condensat (26), de vapeur (9, 40) et le cas échéant de gaz à convertir (9), un chauffage (19, 34, 38) disposé dans la zone inférieure (13) du récipient, une conduite d'évacuation (15) disposée dans la zone supérieure du récipient et conduisant à l'un des échangeurs de chaleur (16, 37) placés avant le réacteur de conversion, un séparateur de condensat (25) dans lequel est séparé le condensat apparaissant lors du refroidissement (24) du gaz converti, et une conduite (26) conduisant, de l'espace du condensat du séparateur (25) dans l'espace de condensat situé dans la zone inférieure (13) du récipient (12, 39).

6. Procédé suivant la revendication 5, caractérisé en ce que le chauffage (19, 34, 38) est constitué d'un échangeur de chauffé par le courant de gaz converti (18, 33) et qu'il est éventuellement disposé à l'extérieur du récipient (12, 39), une liaison avec le récipient (12) étant créée par une conduite d'amenée du condensat et par une conduite d'évacuation de vapeur.

**Claims**

1. A process for the single- or multi-stage conversion of a gas stream, containing carbon monoxide which has been produced by gasifying liquid or solid fuels at pressures of between 40 and 100 bar, in which before its entry into a converting reactor, the gas stream is supplied with steam which is required for the conversion and which is at least partially produced from a condensate resulting during the cooling of the converted gas stream, characterized in that the gas stream leaving the gasification is cooled by indirect heat exchange and, if necessary, subjected to a purification, the condensate is vaporized by indirect heat exchange with at least partially converted gas and is fed to the conversion, together with the gas stream.

2. A process according to claim 1, characterized in that a condensate is used which is obtained during the cooling of the converted gas stream whilst producing medium pressure steam.

3. A process according to claim 1 or claim 2, characterized in that the condensate is vaporized by heat exchange with a partially converted gas stream which issues from a first of a plurality of conversion stages.

4. A process according to one of claims 1 to 3, characterized in that, during the vaporization, the condensate is in contact with the gas stream.

5. Apparatus for carrying out the process according to one of claims 1 to 4 comprising a gasification plant (3) for producing a gas stream containing carbon monoxide, a conversion reactor (17, 22) for converting the carbon monoxide in the presence of steam into carbon dioxide and hydrogen, heat exchangers for heating the gas stream (16, 37) to the inlet temperature of the conversion reactor (17, 22), which, in particular, are heated by indirect heat exchange with the converted gas stream, and for cooling the converted gas stream (24, 28), characterized by a container (12, 39) having supply lines for condensate (26), steam (9, 40) and, if necessary, gas (9) which is to be converted, a heating means (19, 34, 38) assigned to the lower region (13) of the container, a discharge line (15) arranged in the upper region of the container leading to one of the heat exchangers (16, 37) connected before the conversion reactor, a condensate separator (25), in which condensate produced during cooling (24) of the converted gas stream, is separated, and a line (26) which leads from the condensate space of the separator (25) to the condensate space in the lower region (13) of the container (12, 39).

6. Apparatus according to claim 5, characterized in that the heating means (19, 34, 38) consists of a heat exchanger heated by a converted gas stream (18, 33) and possibly arranged outside the container (12, 39), a connection to the container (12) then being provided by means of a condensate supply line and a vapour discharge line.

Fig. 1

EP 0 044 071 B2

Fig. 2

450°C

Fig. 3